(19) Europäisches Patentamt / European Patent Office / Office européen des brevets

(11) **EP 4 118 873 B1**

(12) **EUROPEAN PATENT SPECIFICATION**

(45) Date of publication and mention of the grant of the patent:
**27.12.2023 Bulletin 2023/52**

(21) Application number: **20745227.7**

(22) Date of filing: **30.07.2020**

(51) International Patent Classification (IPC):
**H04W 36/00** (2009.01)    **H04W 36/26** (2009.01)
**H04W 84/04** (2009.01)    **H04W 36/08** (2009.01)

(52) Cooperative Patent Classification (CPC):
**H04W 36/0005;** H04W 36/08; H04W 36/26;
H04W 84/047

(86) International application number:
**PCT/EP2020/071475**

(87) International publication number:
**WO 2021/180339 (16.09.2021 Gazette 2021/37)**

(54) **METHODS OF FACILITATING THE HANDOVER OF A USER EQUIPMENT, UE, IN A TELECOMMUNICATION NETWORK FROM A BASE STATION TO A RELAY NODE, AS WELL AS CORRESPONDING NODES AND MODULES**

VERFAHREN ZUR ERMÖGLICHUNG DER ÜBERGABE EINES BENUTZERGERÄTS IN EINEM TELEKOMMUNIKATIONSNETZWERK VON EINER BASISSTATION AN EINEN RELAISKNOTEN SOWIE ENTSPRECHENDE KNOTEN UND MODULE

PROCÉDÉS POUR FACILITER LE TRANSFERT INTERCELLULAIRE D'UN ÉQUIPEMENT UTILISATEUR, UE, À PARTIR D'UNE STATION DE BASE VERS UN NOEUD RELAIS DANS UN RÉSEAU DE TÉLÉCOMMUNICATION, AINSI QUE NOEUDS ET MODULES CORRESPONDANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.03.2020 EP 20404002**

(43) Date of publication of application:
**18.01.2023 Bulletin 2023/03**

(73) Proprietor: **Telefonaktiebolaget LM Ericsson (publ)**
**164 83 Stockholm (SE)**

(72) Inventors:
- **TAN, Ahmet Serdar**
  **34396 Istanbul (TR)**
- **DEHGHAN BIYAR, Elham**
  **34390 Istanbul (TR)**

(74) Representative: **Ericsson Patent Development Torshamnsgatan 21-23 164 80 Stockholm (SE)**

(56) References cited:
| | |
|---|---|
| WO-A1-2013/137600 | WO-A1-2014/127795 |
| US-A1- 2011 249 558 | US-A1- 2013 225 181 |
| US-A1- 2015 171 953 | US-A1- 2015 334 614 |

**Description**

The present disclosure generally relates to the field of telecommunication networks, and, more specifically, to method of facilitating the handover of a User Equipment, UE, in a telecommunication network from a base station to a relay node, as well as corresponding nodes and modules.

Background

Relay nodes, for example Integrated Access Backhaul, IAB, nodes, enable flexible and dense deployment of radio cells to increase Quality of Service for User Equipment, UE. Various methods and procedures for IAB nodes are defined in the 3GPP technical report 3GPP TR 38.874.

The IAB node is, for example, a Radio Access Network, RAN, node that support wireless access to UE and wirelessly backhauls the access traffic. The IAB-donor, for example a base station like the gNodeB, is a RAN node which provides the UE interface to the core network of the telecommunication network and wireless backhauling functionality to IAB nodes. IAB nodes may have smaller cells compared to regular base stations. IAB designs are depicted with five architecture reference diagrams. These diagrams vary corresponding to the modification needed on interfaces or additional required functionalities for example to accomplish multi-hop forwarding or anything alike.

In order to obtain OAM functionality for OAM configuration, the IAB node may authenticate with operator's network and establishes IP connectivity. Before initiating the UE's serving phase or further IAB node connections, the IAB node's DU, gNB or UPF are set up with all interfaces to other RAN-nodes and CN. Finally, the IAB node provides service to UE or other IAB nodes.

Topology adaption has the aim of topology modification to assure that an IAB node can provide services for User Equipment, UE, in the case of loss or degradation of current active backhaul path. Topology adaptation is consisting of information collection, topology determination and reconfiguration. In addition, IAB Topology adaptation can be caused by integration or detachment of an IAB node from the topology, backhaul link overload detection, link failure or backhaul link quality deterioration.

In the control plane, the handover preparation and execution phase is performed without core network involvement hence all the messages are exchanged among the base stations. In handover completion phase the release of the resources at the source base station is caused by the target base station. For the user plane handling, in order to avoid data loss during handover in the preparation phase, tunnels can be established among source and target base stations. So that, for execution phase user data can be forwarded.

The location management function, LMF, is arranged to manage the location of a registered UE for coordinating and scheduling of resources. This function evaluates the final location, estimates the velocity and may assess the acquired accuracy. It also obtains location demands for a target UE. In short, the LMF is arranged to determine the outcome of the positioning in geographical coordination.

One of the ongoing challenges in this field relates to the effective deployment of relay stations for supporting in the telecommunication needs of UE in a certain region.

WO 2013/137600 discloses a method for handover of UEs connected to a mobile relay node from a source Donor eNodeB, DeNB, to a target DeNB.

US 2015/334614 discloses a method of handover of a UE between a first base station of a first type and a second base station of a second different type in a cellular network.

US 2013/0225181 discloses a method wherein an access point reduces the service available to lower priority access terminals and/or increase the service available to higher priority access terminals when the usage of one or more resources at the access point exceeds a predetermined threshold.

WO 2014/127795 discloses a method for an inter- Radio access technology handover of a UE from a first network entity to a second network entity.

US2015/0171953 discloses a virtual range extender by selecting a second UE as a relay UE for a first UE.

Summary

The invention is set out by the appended independent claims. Further embodiments are provided by the dependent claims.

In a first aspect of the present disclosure, there is presented a method of handing over a User Equipment, UE, in a telecommunication network from a base station to a relay node, which relay node is arranged to relay traffic between serving UE and said base station.

The method comprises the steps of:

- receiving, by said relay node, from said base station a request for handing over a UE connected to said base station;
- transmitting, by said relay node, a QoS query request to a QoS Status module for querying whether said QoS parameter of said UE is below said QoS threshold;
- receiving, by said relay node, from said QoS Status module a QoS query acknowledgement thereby acknowledging that said QoS parameter of said UE is below said QoS threshold;
- transmitting, by said relay node, to said base station, based on said QoS query acknowledgement, a handover acknowledgement message thereby acknowledging the handover of said UE from said base station to said relay node.

AMENDED SHEET

The above described aspect may be best explained as follows. Whenever a particular relay node is deployed in a telecommunication network it may cover a particular area. The covered area of the relay node may be comprised by the covered area of the base station it associates with, i.e. the base station on behalf of which it relays traffic to, and from, UE. The covered area of the relay node is thus, typically, much smaller compared to the covered area of the base station.

The above entails that UE that are in range of the relay node may also be in range of the base station. Those UE may, most likely, receive better signals from the relay node compared to the signals received from the base station. The relay node is, after all, most likely closer to those UE compared to the base station.

The inventors have found that it may not be necessary to handover all UE in range of the relay node from the base station to the relay node. The present disclosure focusses on those UE that have a QoS parameter that is below a QoS threshold. The UE that have a Quality of Service that is beneath a given standard, are to be handed over from the base station to the relay station.

The above entails that not all UE in range of the relay station are to be handed over. UE that have a Quality of Service that is acceptable, i.e. above a particular standard, do not need to be handed over. These UE may still be serviced efficiently by the base station itself.

The inventors have found that thus not all UE in the area covered by the relay station are to be handed over to the relay station, as in such a situation, there is a risk that the UE that already have an acceptable QoS will experience a reduced QoS.

It is noted that the relay station is, for example, an Integrated Access Backhaul, IAB, node and the base station is, for example, a gNodeB of a 5G telecommunication network.

The IAB node may be a New Radio, NR, base station which is arranged for terminating the gNodeB-DU functionality towards the UE, access link, and towards gNodeB-CU.

The gNodeB, or the IAB donor, may be a NR base station which is arranged for terminating gNodeB-CU functionality towards the IAB node and N2/Xn interfaces towards the rest of the telecommunication network. The IAB donor may also terminate RRC/PDCP of the MT functionality of the IAB node as well as lower layers in case of single hop.

It is further noted that the QoS parameter may refer to any radio network condition such as throughput, received signal strengths, modulation and coding scheme, latency, etc.

In an example, the method further comprises the steps of:

- receiving, by said relay node, from said UE, a reconfiguration complete message thereby indicating that said UE is handed over from said base station to said relay node;
- transmitting, by said relay node, to a QoS Status Module a UE status update message thereby indicating that said UE is connected to said relay node.

In an example, the step of determining comprises:

- transmitting, by said relay node, a QoS query request to a QoS Status module for querying whether said QoS parameter of said UE is below said QoS threshold;
- receiving, by said relay node, from said QoS Status module a QoS acknowledgement thereby acknowledging that said QoS parameter of said UE is below said QoS threshold.

The QoS Status module may be arranged to periodically monitor the QoS of any of the UE and may maintain that particular information. The QoS Status module may thus act as a central node maintaining QoS parameters of UE in the telecommunication network.

In a second aspect of the present disclosure, there is provided a method of facilitating the handover of a User Equipment, UE, in a telecommunication network from a base station to a relay node, which relay node is arranged to relay traffic between serving UE and said base station, wherein said method comprises the steps of:

- receiving, by a Quality-of-Service, QoS, status module a QoS query request for requesting whether a QoS parameter of a UE served by said base station, is below a QoS threshold for said relay node;
- transmitting, by said QoS status module, a QoS query acknowledgement for acknowledging that said QoS parameter of said UE is below said QoS threshold, thereby facilitating the handover of said UE from said base station to said relay node.

It is noted that the advantages and definitions as disclosed with respect to the embodiments of the first aspect of the invention are also applicable to the embodiments of the second aspect of the invention.

The second aspect of the present disclosure is directed to a method performed by a QoS Status module, wherein the QoS Status module is arranged to receive QoS query requests from a relay node, and for transmitting a QoS query acknowledgement back to the relay node. These queries are directed to information whether the QoS parameter of a particular UE is below a QoS threshold.

In an example, the method further comprises the steps of:

- determining, by a Quality-of-Service, QoS, Status module, QoS parameters of UE served by said base station;
- retrieving, by said QoS Status module, from a Location Management Function, LMF, locations of said UE served by said base station;
- determining, by said QoS status module, a QoS region in which a plurality of UE are located having QoS parameters below a QoS threshold based on said retrieving and determining steps;
- requesting, by said QoS status module, deployment of a relay node in said QoS region for serving said plurality of UE having QoS parameters below said QoS threshold.

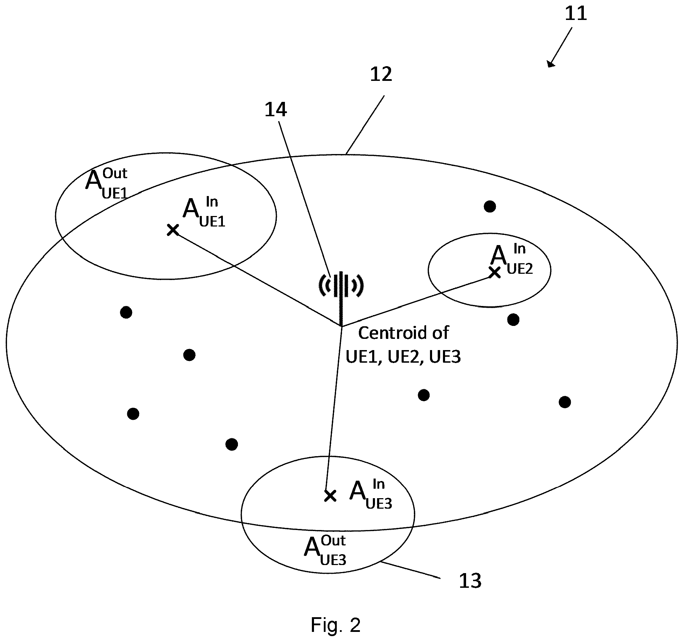

The determining step as disclosed above may be conditional on the feature that a likelihood condition is met. The likelihood condition is discussed in more detail with respect to figure 2 below.

The above described example is directed to the deployment of a new relay node in the telecommunication network. The inventors have found that the same concept may be utilized for deploying relay nodes in the telecommunication network. That is, a QoS region in which a plurality of UE are located that have a QoS parameter below a QoS threshold may be used for deploying a new relay node. The intention is that those UE are to be handed over to the newly deployed relay node.

In an example, the step of determining said QoS region comprises determining a centroid of said QoS region, and wherein said step of requesting comprises requesting deployment of said relay node at said determined centroid.

The locations of the UE having a QoS parameter below a QoS threshold may be used for determining a centre region of the QoS region. Preferably, the relay node is to be deployed at that centre region for efficiently serving the UE having a QoS parameter below the QoS threshold.

In a further example, the step of determining said QoS region comprises forecasting future QoS parameters and locations of said UE served by said base station based on previous QoS parameters and previous locations of said UE served by said base station.

In another example, the method comprises the steps of:

- receiving, by a relay manager module, from said QoS status module, a request for deploying said relay node in said QoS region for serving said plurality of UE having QOS parameters below said QoS threshold;
- transmitting, by said relay manager module, to said relay node a request for deploying said relay node in said QoS region.

In a further aspect of the present disclosure, there is provided a relay node for facilitating the handover of a User Equipment, UE, in a telecommunication network from a base station to a relay node, which relay node is arranged to relay traffic between serving UE and said base station, wherein said relay node comprises:

- receive equipment arranged for receiving, from said base station a request for handing over a UE connected to said base station;
  process equipment arranged for determining that a QoS parameter of said UE is below a QoS threshold;
- transmit equipment arranged for transmitting, to said base station, based on said determining, a handover acknowledgement message thereby facilitating the handover of said UE from said base station to said relay node.

In an example, the receive equipment is further arranged for receiving, from said UE, a reconfiguration complete message thereby indicating that said UE is handed over from said base station to said relay node, and wherein said transmit equipment is arranged for transmitting to a QoS Status Module a UE status update message thereby indicating that said UE is connected to said relay node.

In a further example, the transmit equipment is further arranged for transmitting a QoS query request to a QoS Status module for querying whether said QoS parameter of said UE is below said QoS threshold, and wherein said receive equipment is arranged for receiving from said QoS Status module a QoS acknowledgement thereby acknowledging that said QoS parameter of said UE is below said QoS threshold

In a further aspect of the present disclosure, there is provided a Quality-of-Service, QoS, status module for facilitating the handover of a User Equipment, UE, in a telecommunication network from a base station to a relay node, which relay node is arranged to relay traffic between serving UE and said base station, wherein said QoS status module comprises:

- receive equipment arranged for receiving a QoS query request for requesting whether a QoS parameter of a UE served by said base station, is below a QoS threshold for said relay node;
- transmit equipment arranged for transmitting a QoS query acknowledgement for acknowledging that said QoS parameter of said UE is below said QoS threshold, thereby facilitating the handover of said UE from said base station to said relay node.

In an example, the QoS status module further comprises:

- process equipment arranged for determining QoS parameters of UE served by said base station;
- retrieve equipment arranged for retrieving, from a Location Management Function, LMF, locations of said UE served by said base station;
- process equipment arranged for determining a QoS region in which a plurality of UE are located having QoS parameters below a QoS threshold based on said retrieving and determining steps;
- request equipment arranged for requesting deployment of a relay node in said QoS region for serving said plurality of UE having QoS parameters below said QoS threshold.

In a further example, the process equipment is further arranged for determining a centroid of said QoS region, and wherein said request equipment is arranged for requesting deployment of said relay node at said determined centroid.

In another example, the process equipment is further arranged for forecasting future QoS parameters and locations of said UE served by said base station based on previous QoS parameters and previous locations of said UE served by said base station.

In another aspect of the present disclosure, there is provided a relay manager module for cooperating with a QoS status modules in accordance with any of the examples provided above, wherein said relay manager module comprises:

- receive equipment arranged for receiving, from said QoS status module, a request for deploying said relay node in said QoS region for serving said plurality of UE having QOS parameters below said QoS threshold;
- transmit equipment arranged for transmitting to said relay node a request for deploying said relay node in said QoS region.

In a further aspect, there is provided a computer program product comprising computer readable medium having instructions stored thereon which, when executed by a network function, cause said network function to implement a method in accordance with any of the method examples as provided above.

It is to be understood that a particular network node, for example the base station the relay node, the QSM or the LSM, may comprise any suitable combination of hardware and/or software needed to perform the tasks, features, functions and methods disclosed herein. This is summarized by the wording equipment in the particular embodiments. Moreover, while the components of such a network are depicted as single boxes located within a larger box, or nested within multiple boxes, in practice, a network node may comprise multiple different physical components that make up a single illustrated component.

It is further noted that the QSM as well as the LSM may reside in the Radio Access Network, RAN, part of the telecommunication network.

The above mentioned and other features and advantages of the disclosure will be best understood from the following description referring to the attached drawings. In the drawings, like reference numerals denote identical parts of parts performing an identical or comparable function or operation.

Brief description of the drawings

Fig. 1 shows a general scenario for low and good QoS User Equipment, UE, in the coverage area of the base station and the relay node;

Fig. 2 shows an example scenario for relay node placement to the centroid of UE;

Fig. 3 shows functional blocks of QoS and location based relay station access control;

Fig. 4 shows a flow chart of low QoS region identification;

Fig. 5 shows a flow chart illustrating UE access control at the relay station;

Fig. 6 shows a procedure diagram of a new relay station deployment;

Fig. 7 shows a procedure diagram of UE access control at the relay station;

Fig. 8 shows a relay station in accordance with the present disclosure.

Fig. 9 shows a Quality-of-Service, QoS status module in accordance with the present disclosure;

Fig. 10 shows a relay manager module which is not according to the invention and is present for illustration purposes only.

<u>Detailed description</u>

Embodiments contemplated by the present disclosure will now be described in more detail with reference to the accompanying drawings. The disclosed subject matter should not be construed as limited to the embodiments set forth herein. Rather, the illustrated embodiments are provided by way of example to convey the scope of the subject matter to those skilled in the art.

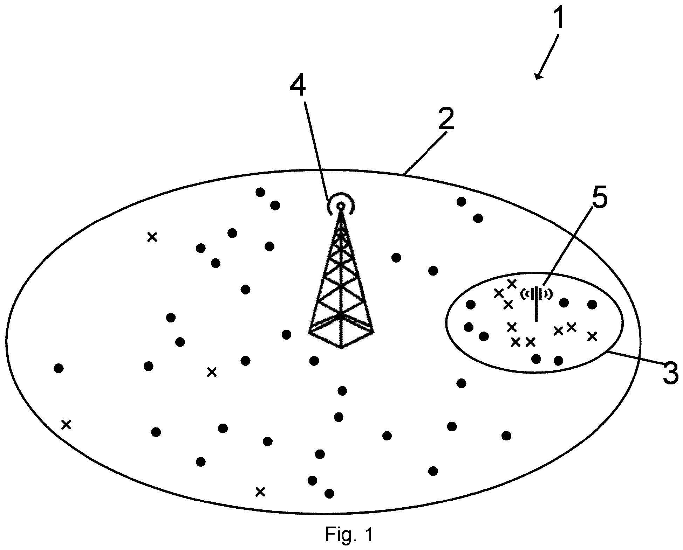

Figure 1 shows a general scenario 1 for low and good QoS User Equipment, UE, in the coverage area 2 of the base station 4 and the relay node 5. The coverage area of the base station is indicated with reference numeral 2 and the coverage area of the relay node is indicated with reference numeral 3.

Here, UE with satisfactory and low QoS are represented with dots and crosses, respectively. As seen in figure 1, there is a regional QoS degradation, wherein several UE close to each other experience lower QoS compared to other UE. This is shown by the set of crosses close to the relay node. It is noted that due to the mobility of UE, this degradation might be temporary.

In the current technology, when a new relay node is setup in the region to handle low QoS problems, all UE in the range of the relay node would switch to the relay node, i.e. handed over to the new relay node, because the signal quality received from the new relay node would most likely be higher than that of the base station.

The inventors have found that this might not be the most efficient way forward. Some UE in the coverage 3 of the relay node 5 might be receiving a satisfactory UE already, and their handover to the new relay node 5 might not be necessary. In fact, the handover of these UE to the new relay node might even be undesired. That is, when UE with satisfactory QoS are being handed over to the new relay node besides the ones with low QoS, there might be negligible QoS increase for the UE with low QoS.

After a new IAB node is deployed and activated, all UE in the serving area of the new IAB node might request handover to the new relay node since signal quality from the new relay node will, most likely, be better than the signal quality from the base station. All UE may need to complete all steps of handover such as RRC Reconfiguration, UE Context Transfer, Path Switch, etc. Performing handover for all UE increases handover signaling overhead.

In the existing technology, relay nodes are used to extend the coverage or increase signal strength for UE. However, relay nodes are not aware which UE have lower QoS in advance. When all UE close to the new relay node, regardless of their current QoS, connect to the new relay node, the new relay node's data plane queue might get congested unnecessarily. Thus, in the existing technology, setting up new relay nodes in regions with low QoS might not significantly improve the QoS of the UE with low QoS.

Currently, relay nodes are not aware of the QoS of users in advance. If all UE close to the relay node connect to the new relay node, congestion might occur on the resource limited wireless backhaul of relay nodes. In such a case, some users that already receive high QoS might receive lower QoS if they connect to the new relay node.

The present disclosure is directed to methods and device to solve some problems in existing solutions regarding relay nodes. The QoS Status Module, QSM, may periodically monitor the QoS and location of UE with low QoS and may use a correlator method to detect or predict a low QoS region. Here, QoS may refer to any radio network condition such as throughput, modulation and coding scheme, latency, etc. When a low QoS region is identified, a new relay node may be activated through the IAB Manager Module, IMM, and only UE with low QoS in that region are admitted connecting to the new relay node via, for example, a handover.

In order to detect a low QoS region, the location ranges, based on location accuracy, of a plurality of low QoS UE are correlated with the coverage area of a potential relay node placed at the centroid of low QoS UE. This is, for example, shown in figure 2. Figure 2 shows an example scenario 11 for a relay node 14 to be placed at the centroid of a dense pact of UE having a relatively low QoS. The location estimation of each of those UE is inaccurate and visualized with the circle having reference numeral 13.

If the low QoS UE are within the range of relay node with high probability, then a low QoS region is detected.

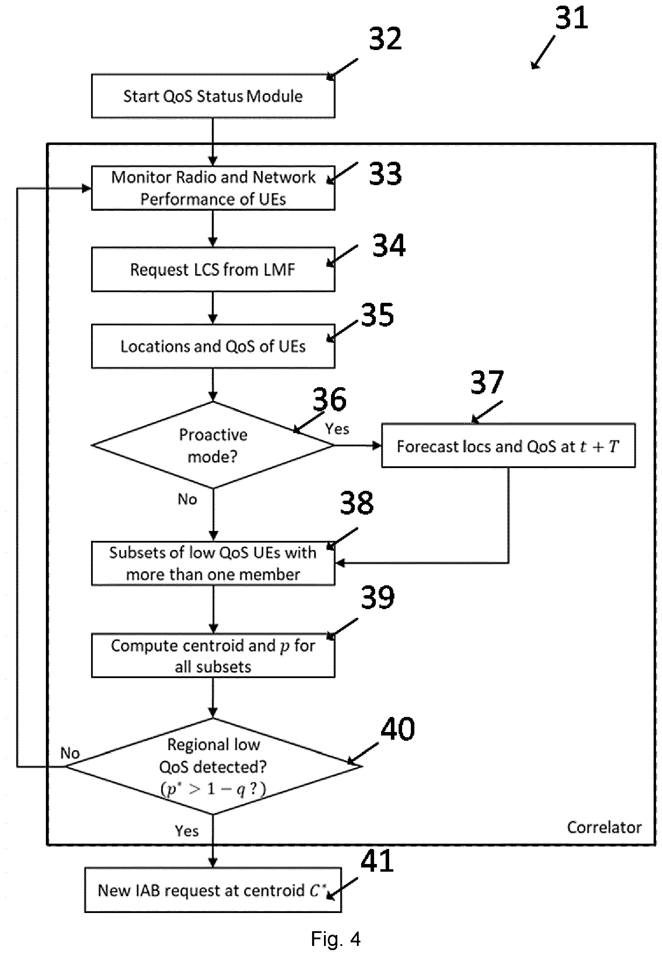

In order to predict a future low QoS region, previous values of the QoS of UE and their location are processed with machine learning methods, such as multi-variate regression, to obtain forecasts on the future QoS and locations of UEs. First, low QoS UE are identified based on predicted QoS values. Then, same procedure is used to identify a low QoS region where location ranges of low QoS UEs are predictions instead. The above is explained in more detail with respect to figure 4.

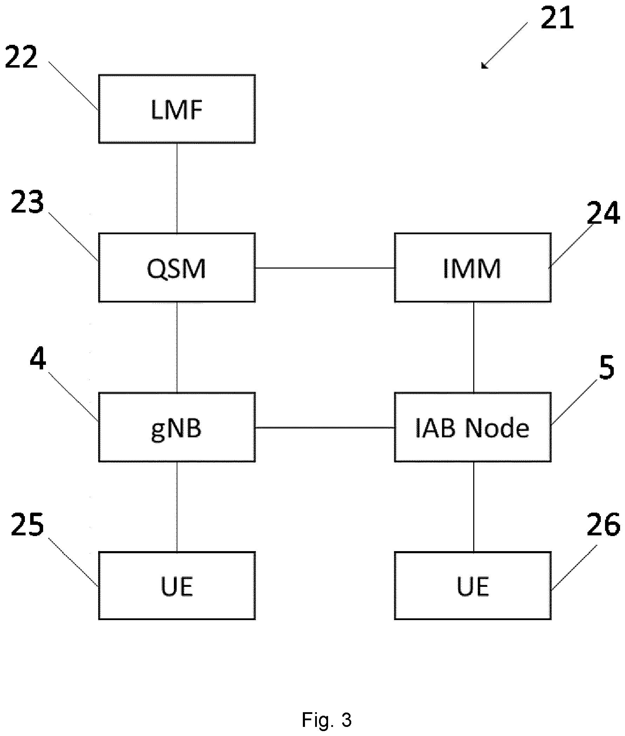

Figure 3 shows functional blocks 21 of QoS and location based relay station access control.

A UE 25, 26 is an end-user wireless communication terminal that is able to connect to a base station 4 like the gNodeB (IAB-donor) or the relay node 5 (IAB-node) for data transfer.

Relay node 5 is a Radio Access Network, RAN, node that supports wireless access to UE and wirelessly backhauls the access traffic. In the proposed solution, relay nodes can be activated on-demand by the IMM 24. A relay node can be fixed or a mobile on an Unmanned Aerial Vehicle, UAV.

The IAB-donor, or gNB, is a RAN node which provides UE's interface to the core network of the telecommunication network, and wireless backhauling functionality to IAB-nodes. IMM 24 is a functional node that interacts with IAB-node and QSM 23 for IAB activation, deactivation and management. IMM 24 receives regional IAB activation requests from QSM 23 and activates a suitable relay node or dispatches a UAV relay node to the region.

QSM 23 is a functional node that interacts with gNB and LSM to track the QoS status of the UEs and request location of low QoS UEs from LMF 22. QSM 23 correlates QoS and location of users to identify whether there is a regional low QoS issue. LMF 22 is a location services management function that can reply with the location, having an accuracy level, to the requesting functions.

Fig. 4 shows a flow chart 31 of low QoS region identification. The QSM is responsible for the low QoS region identification method 32. As shown, the QSM may continuously monitor 33 the QoS parameters of UE, for example via radio measurements and network conditions, etc. An operator can set a threshold based on radio measurements and network conditions to identify a parameter value for low QoS. Then, the location of the UE may periodically be requested from the LMF 34. The locations of the UE acquired from LMF is accompanied with an accuracy value. The location and QoS of the UE may be used 35 to identify whether there is a regional QoS degradation through a correlator that processes all previous low QoS UE locations and QoS values.

An example correlator is shown in figure 4. The correlator can have two modes 36; regular and proactive 37. In the regular mode, the locations and QoS values may be observed values from the gNB and LMF. Whereas in the proactive mode, future values of the locations and QoS may be forecasted for time t+T. An example forecast method is multi-variate regression using previous QoS and location observations.

Based on the chosen mode of correlator, the observed/forecasted locations and QoS values are used in the subsequent steps 38, 39, 40. In the next step of the correlator, all subsets 38 of low QoS UEs with more than one member may be computed. Then, for each subset, centroid 39 and likelihood of low QoS region is computed. An example scenario with three UE for centroid and likelihood computation is given in figure 2.

Centroid is computed as the mean value of the locations of UE. Likelihood can be computed, for a given centroid, as the fraction of overlapping areas of location range and relay node range.

In the proactive mode, the location ranges may be forecasted for t+T.

The likelihood may be computed as follows.

$$p = \left(A_{UE1}^{in} + A_{UE2}^{in} + A_{UE3}^{in}\right)/\left(A_{UE1}^{tot} + A_{UE2}^{tot} + A_{UE3}^{tot}\right)$$

$$A_{UEi}^{tot} = A_{UEi}^{in} + A_{UEi}^{out}$$

Likelihood and centroid may be computed for each subset, and the largest subset with p>1-q, (q«1), where p denotes the likelihood for a given centroid and q can be predefined by the operator, is identified as being in a low QoS region. For such a subset, likelihood and centroid are denoted with p^* and C^*, respectively. If none of the subsets satisfy the condition, the new relay node may not be activated, and the monitoring may continue.

As the final step, if a low QoS region is identified 40, new relay node activation request 41 is sent to the IMM and UE with low QoS in the range of new relay node are recorded to the Allowed Handover List in the QSM.

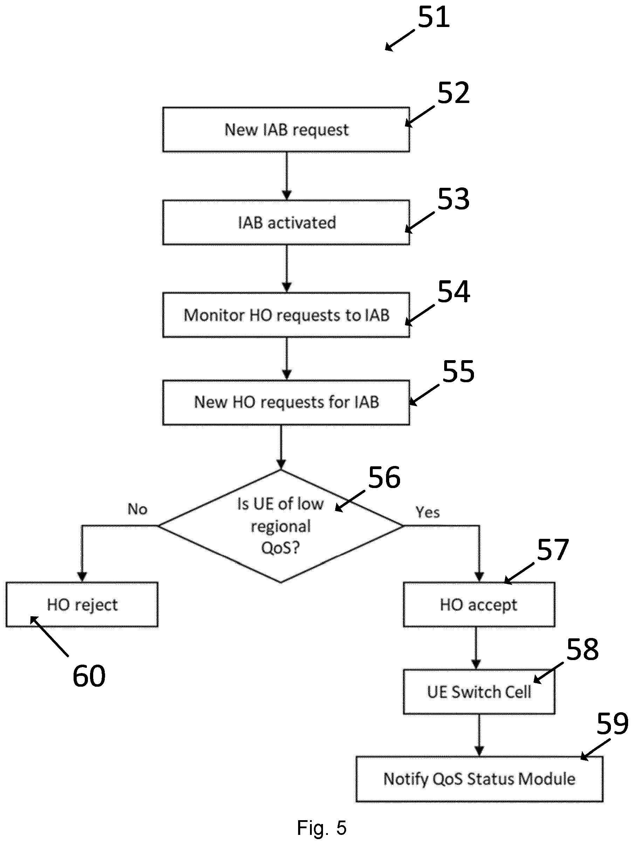

Figure 5 shows a flow chart 51 illustrating UE access control at the relay station.

Following the activation 52, 53 of a new relay node on a low QoS region, access control for the handover requests to new relay node will be processed. As UE may continuously monitor the radio performance, when a new relay node is activated, any UE in the range of relay node might request handover 54 to the new relay node. Upon receiving a HO request 55, the base station may query the QSM regarding the status of requesting UE. If the UE is recorded as a low QoS UE in the relay node coverage, then the UE will be switched 57m 58 to the new relay node, which is then notified to the QoS Status module 59. Otherwise, the handover request will be rejected 60, and the UE will remain attached to base station.

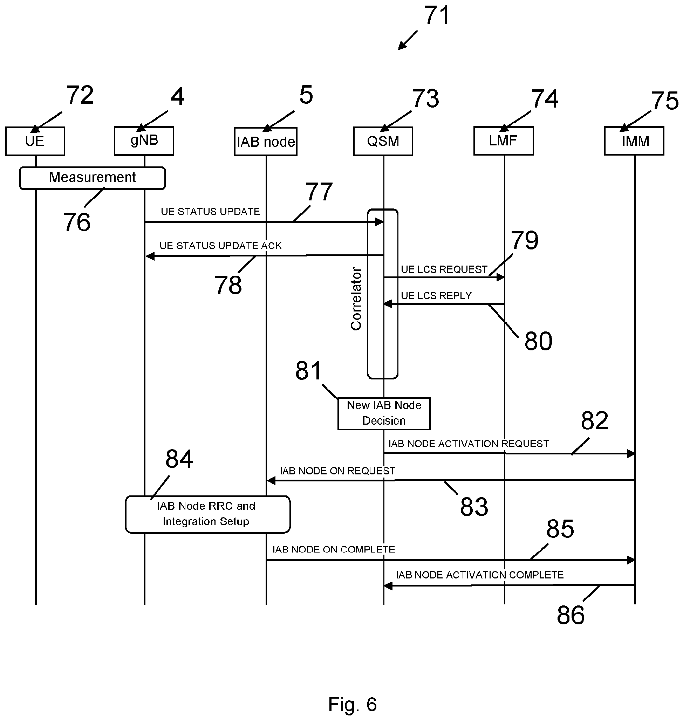

Figure 6 shows a procedure diagram 71 of a new relay station deployment.

An example procedure diagram 71 for new IAB node 5 activation is given figure 6. Periodic measurements 76 of UEs are sent to QSM 73 with UE STATUS UPDATE message 77 which can include the identity of the UE 72 and radio measurements. QSM 73 can reply with UE STATUS UPDATE ACK message 78 to acknowledge the status update in the records.

Then, QSM may send UE LCS REQUEST message 79 to the LMF with the UE identifier, and the LMF may reply with UE LCS REPLY message 80. The reply may include the location of the UE accompanied with an accuracy. If QSM decides 81 to activate a new IAB node, then it may send an IAB NODE ACTIVATION REQUEST message 82 including the requested IAB location to IMM. Then, IMM may send an IAB NODE ON REQUEST message 83 to an available IAB node on the requested IAB location, and the IAB node may perform IAB Node RRC and Integration setup 84 with the base station 4. IAB node may reply with IAB NODE ON COMPLETE message 85 to notify the IMM regarding the activation status. Finally, IMM may send an IAB NODE ACTIVATION COMPLETE message 86 to the QSM.

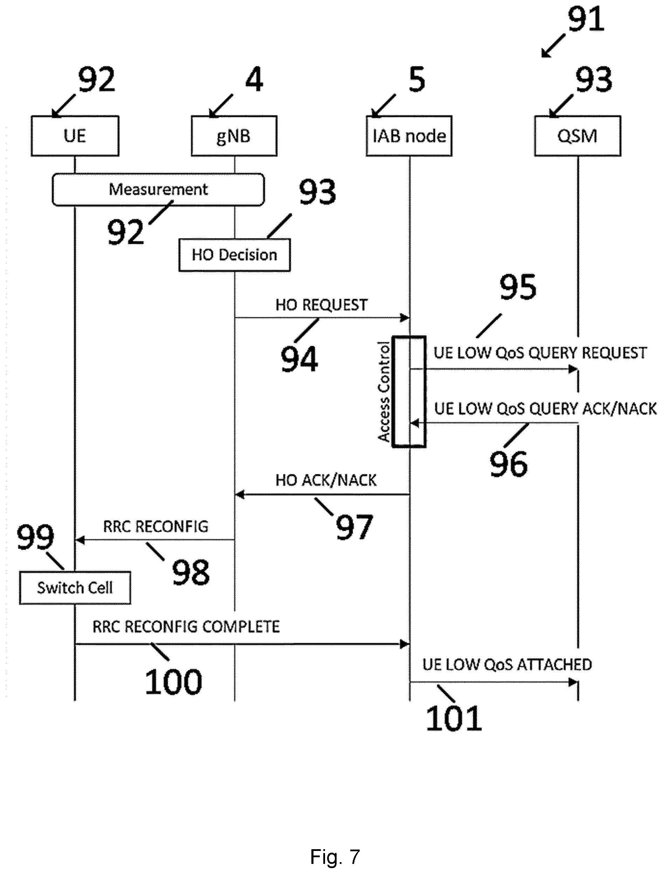

Figure 7 shows a procedure diagram of UE access control at the relay station.

An example procedure diagram 91 for UE access control is given in figure 7. Based on the UE 92 measurements 92, the gNB 4 can decide to handover 93 the UE 92 to the new IAB node 5. If gNB 4 decides to handover, it may send a Handover REQUEST message 94 to the new IAB node 5. The IAB node 5 may query the QSM 93 with a UE LOW QoS QUERY REQUEST message 95 which may include the UE and the IAB node identity. QSM may reply with UE LOW QoS QUERY ACK/NACK 96 which includes information whether the UE 92 is recorded as low QoS for the related IAB node 5.

Based on this message, the IAB node 5 may send HO ACK/NACK 97 to the gNB 4. If HO NACK is sent, meaning the UE 92 is not allowed to handover, the procedure does not proceed further. If HO ACK is sent, RRC RECONFIG message 98 may be sent from the gNB 4 to the UE 92 and the UE switches 99 its cell. Then the UE may send a RRC RECONFIG COMPLETE message 100 to the new IAB and IAB may send a UE LOW QoS ATTACHED message 101 to the QSM for UE status update.

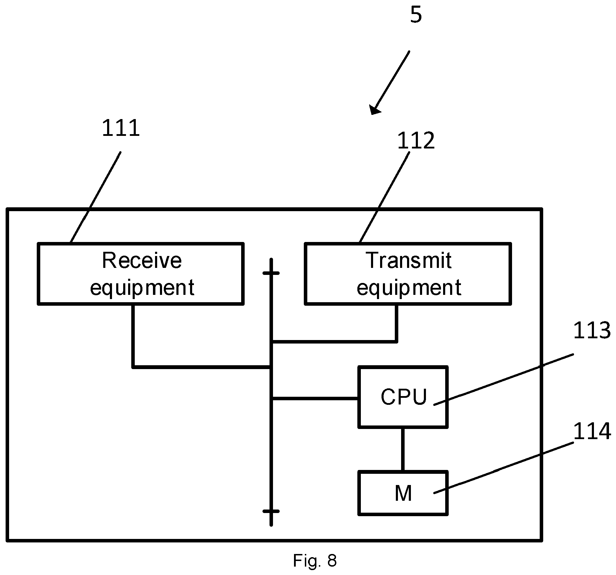

Figure 8 shows a relay station 5 in accordance with the present disclosure.

The relay node 5 is arranged for facilitating the handover of a User Equipment, UE, in a telecommunication network from a base station to a relay node, which relay node is arranged to relay traffic between serving UE and said base station, wherein said relay node comprises:

- receive equipment 111 arranged for receiving, from said base station a request for handing over a UE connected to said base station;
  process equipment 113 arranged for determining that a QoS parameter of said UE is below a QoS threshold, wherein the process equipment 113 may be connected to a memory 114;
- transmit equipment 112 arranged for transmitting, to said base station, based on said determining, a handover acknowledgement message thereby facilitating the handover of said UE from said base station to said relay node.

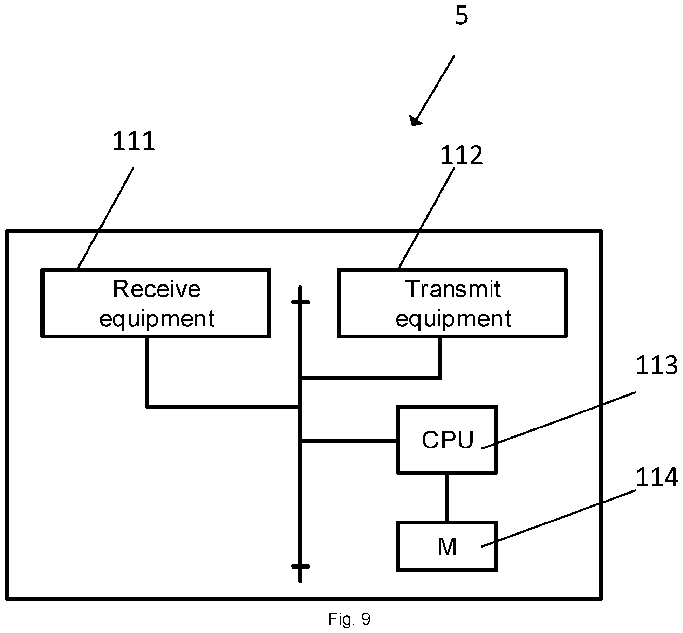

Figure 9 shows a Quality-of-Service, QoS status module 23 in accordance with the present disclosure.

The Quality-of-Service, QoS, status module 23 is arranged for facilitating the handover of a User Equipment, UE, in a telecommunication network from a base station to a relay node, which relay node is arranged to relay traffic between serving UE and said base station, wherein said QoS status module 23 comprises:

- receive equipment 121 arranged for receiving a QoS query request for requesting whether a QoS parameter of a UE served by said base station, is below a QoS threshold for said relay node;
- transmit equipment 122 arranged for transmitting a QoS query acknowledgement for acknowledging that said QoS parameter of said UE is below said QoS threshold, thereby facilitating the handover of said UE from said base station to said relay node.

The QoS status module may comprise a processor 123 in conjunction with a memory 124.

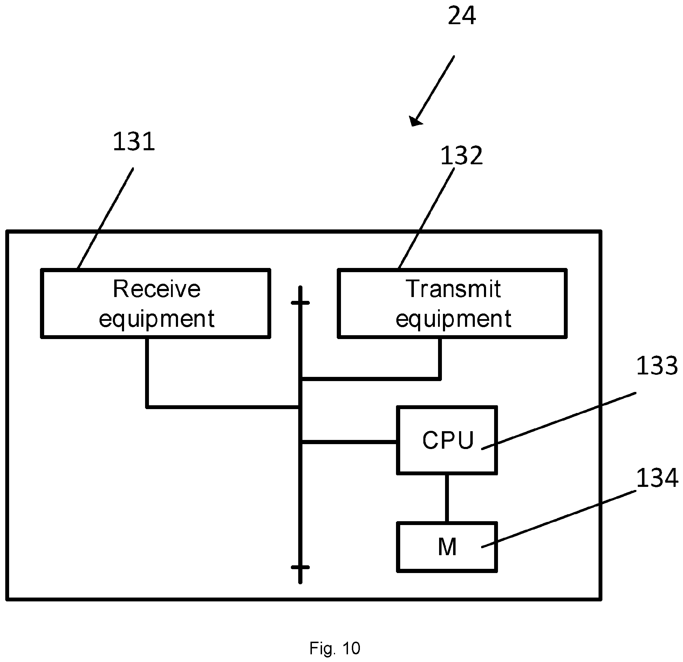

Figure 10 shows a relay manager module 24 in accordance with the present disclosure.

The relay manager module is arranged for cooperating with a QoS status module in accordance with any of the claims 13 - 15, wherein said relay manager module 24 comprises:

- receive equipment 131 arranged for receiving, from said QoS status module, a request for deploying said relay node in said QoS region for serving said plurality of UE having QOS parameters below said QoS threshold;
- transmit equipment 132 arranged for transmitting to said relay node a request for deploying said relay node in said QoS region.

The relay manager module 24 may comprise a processor 133 connected to a memory 134.

One of the aspects of the present disclosure is that the functional system block QSM may monitor the QoS and locations of UE via the base station, may identify low QoS region, may request new relay node activation and may respond to queries for low QoS UE access control.

Another aspect of the present disclosure is that the functional system block IMM may continuously monitor relay nodes and may activate a relay node upon request from the QSM.

The Low QoS Region Identification Method running in the QSM, and as explained with respect to figures 2 and 4 may correlate the UE location and QoS to detect/predict a low QoS region by computing a likelihood for all subsets of UE where a new relay node could be initialized at the centroid of low QoS UE.

The UE Access Control Method, as explained with respect to, for example, figure 6, running in the new relay node that queries the QSM for low QoS UE access control as an interim step following the handover request from the base station to the new relay node itself.

Other variations to the disclosed examples can be understood and effected by those skilled in the art in practicing the claimed disclosures, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid state medium supplied together with or as part of other hardware, but may also be distributed in other forms, such as via the internet or wired or wireless telecommunication systems. Any reference signs in the claims should not be construed as limiting the scope thereof.

**Claims**

1. A method of handing over a User Equipment, UE, in a telecommunication network from a base station to a relay node, which relay node is arranged to relay traffic between a UE and said base station, wherein said method comprises the steps of:

   - receiving, by said relay node, from said base station a request for handing over said UE connected to said base station;

   **characterized by** the steps of:

   - transmitting, by said relay node, a QoS query request to a QoS Status module for querying whether a QoS parameter of said UE is below a QoS threshold for said relay node;
   - receiving, by said relay node, from said QoS Status module a QoS query acknowledgement thereby acknowledging that said QoS parameter of said UE is below said QoS threshold for said relay node;
   - transmitting, by said relay node, to said base station, based on said QoS query acknowledgement, a handover acknowledgement message thereby acknowledging the handover of said UE from said base station to said relay node.

2. A method in accordance with claim 1, wherein said method further comprises the steps of:

   - receiving, by said relay node, from said UE, a reconfiguration complete message thereby indicating that said UE is handed over from said base station to said relay node;
   - transmitting, by said relay node, to said QoS Status module a UE status update message thereby indicating that said UE is connected to said relay node.

3. A method of handing over a User Equipment, UE, in a telecommunication network from a base station to a relay node, which relay node is arranged to relay traffic between a UE and said base station, **characterized in that** said method comprises the steps of:

   - receiving, by a Quality-of-Service, QoS, status module, from said relay node, a QoS query request for requesting whether a QoS parameter of said UE served by said base station, is below a QoS threshold for said relay node;
   - transmitting, by said QoS status module, to said relay node, a QoS query acknowledgement thereby acknowledging that said QoS parameter of said UE is below said QoS threshold if it is determined that the QoS parameter of said UE is below said QoS threshold.

4. A method in accordance with claim 3, wherein said method further comprises the steps of:

- determining, by said QoS Status module, QoS parameters of UE served by said base station;
- retrieving, by said QoS Status module, from a Location Management Function, LMF, locations of said UE served by said base station;
- determining, by said QoS status module, a QoS region in which a plurality of UE are located having QoS parameters below a QoS threshold based on said retrieving and determining steps;
- requesting, by said QoS status module, deployment of a relay node in said QoS region for serving said plurality of UE having QoS parameters below said QoS threshold.

5. A method in accordance with claim 4, wherein said step of determining said QoS region comprises determining a centroid of said QoS region, and wherein said step of requesting comprises requesting deployment of said relay node at said determined centroid.

6. A method in accordance with any of the claims 4-5, wherein said step of determining said QoS region comprises forecasting future QoS parameters and locations of said UE served by said base station based on previous QoS parameters and previous locations of said UE served by said base station.

7. A relay node for facilitating the handover of a User Equipment, UE, in a telecommunication network from a base station to a relay node, which relay node is arranged to relay traffic between a UE and said base station, wherein said relay node comprises:

- receive equipment arranged for receiving, from said base station a request for handing over said UE connected to said base station;

characterized in that the relay node further comprises:

- transmit equipment arranged for transmitting, to a QoS status module, a Quality of Service, QoS, query request for querying whether a QoS parameter of said UE is below a QoS threshold;
- said receive equipment being further arranged for receiving, from said QoS status module, a QoS query acknowledgement thereby acknowledging that said QoS parameter of said UE is below said QoS threshold;
- said transmit equipment being further arranged for transmitting, to said base station, based on said QoS query acknowledgement, a handover acknowledgement message thereby acknowledging the handover of said UE from said base station to said relay node.

8. A relay node in accordance with claim 7, wherein said receive equipment is further arranged for receiving, from said UE, a reconfiguration complete message thereby indicating that said UE is handed over from said base station to said relay node, and wherein said transmit equipment is arranged for transmitting to a QoS Status Module a UE status update message thereby indicating that said UE is connected to said relay node.

9. A Quality-of-Service, QoS, status module for handing over a User Equipment, UE, in a telecommunication network from a base station to a relay node, which relay node is arranged to relay traffic between a UE and said base station, characterized in that said QoS status module comprises:

- receive equipment arranged for receiving, from said relay node, a QoS query request for requesting whether a QoS parameter of said UE served by said base station, is below a QoS threshold for said relay node;
- transmit equipment arranged for transmitting, to said relay node, a QoS query acknowledgement, thereby acknowledging that said QoS parameter of said UE is below said QoS threshold if it is determined that the QoS parameter of said UE is below said QoS threshold.

10. A QoS status module in accordance with claim 9, wherein said QoS status module further comprises:

- process equipment arranged for determining QoS parameters of UE served by said base station;
- retrieve equipment arranged for retrieving, from a Location Management Function, LMF, locations of said UE served by said base station;
- process equipment arranged for determining a QoS region in which a plurality of UE are located having QoS parameters below a QoS threshold based on said retrieving and determining steps;
- request equipment arranged for requesting deployment of a relay node in said QoS region for serving said plurality of UE having QoS parameters below said QoS threshold.

11. A QoS status module in accordance with claim 10, wherein said process equipment is further arranged for determining a centroid of said QoS region, and wherein said request equipment is arranged for requesting deployment of said relay node at said determined centroid.

12. A QoS status module in accordance with any of the claims 10 - 11, wherein said process equipment is further arranged for forecasting future QoS parameters and locations of said UE served by said base station based on previous QoS parameters and previous locations of said UE served by said base station.

13. Computer program product comprising computer readable medium having instructions stored thereon which, when executed by a relay node, cause said relay node to implement a method in accordance with any of the claims 1-2.

14. Computer program product comprising computer readable medium having instructions stored thereon which, when executed by a QoS status module, cause said QoS status module to implement a method in accordance with any of the claims 3-6.

**Patentansprüche**

1. Verfahren zur Übergabe einer Benutzereinrichtung, UE, in einem Telekommunikationsnetzwerk von einer Basisstation an einen Relaisknoten, wobei der Relaisknoten zum Weiterleiten von Verkehr zwischen einer UE und der Basisstation ausgelegt ist, wobei das Verfahren die folgenden Schritte umfasst:

   - Empfangen einer Anforderung durch den Relaisknoten zur Übergabe der mit der Basisstation verbundenen UE von der Basisstation;

   **gekennzeichnet durch** die folgenden Schritte:

   - Senden einer QoS-Abfrageanforderung durch den Relaisknoten an ein QoS-Statusmodul zum Abfragen, ob ein QoS-Parameter der UE unter einer QoS-Schwelle für den Relaisknoten liegt;
   - Empfangen einer QoS-Abfragebestätigung durch den Relaisknoten vom QoS-Statusmodul, um dadurch zu bestätigen, dass der QoS-Parameter der UE unter der QoS-Schwelle für den Relaisknoten liegt;
   - Senden einer Übergabebestätigungsnachricht durch den Relaisknoten basierend auf der QoS-Abfragebestätigung an die Basisstation, um dadurch die Übergabe der UE von der Basisstation an den Relaisknoten zu bestätigen.

2. Verfahren nach Anspruch 1, wobei das Verfahren ferner die folgenden Schritte umfasst:

   - Empfangen einer Rekonfiguration-abgeschlossen-Nachricht durch den Relaisknoten von der UE, um dadurch anzuzeigen, dass die UE von der Basisstation an den Relaisknoten übergeben wird;
   - Senden einer UE-Statusaktualisierungsnachricht durch den Relaisknoten an das QoS Statusmodul, um dadurch anzuzeigen, dass die UE mit dem Relaisknoten verbunden ist.

3. Verfahren zur Übergabe einer Benutzereinrichtung, UE, in einem Telekommunikationsnetzwerk von einer Basisstation an einen Relaisknoten, wobei der Relaisknoten zum Weiterleiten von Verkehr zwischen einer UE und der Basisstation ausgelegt ist, **dadurch gekennzeichnet, dass** das Verfahren die folgenden Schritte umfasst:

   - Empfangen einer QoS-Abfrageanforderung zum Abfragen, ob ein QoS-Parameter der von der Basisstation versorgten UE unter einer QoS-Schwelle für den Relaisknoten liegt, durch ein Dienstqualitäts-,QoS-,Statusmodul vom Relaisknoten;
   - Senden einer QoS-Abfragebestätigung durch das QoS-Statusmodul an den Relaisknoten, um dadurch zu bestätigen, dass der QoS-Parameter der UE unter der QoS-Schwelle liegt, wenn bestimmt wird, dass der QoS-Parameter der UE unter der QoS-Schwelle liegt.

4. Verfahren nach Anspruch 3, wobei das Verfahren ferner die folgenden Schritte umfasst:

   - Bestimmen von QoS-Parametern der von der Basisstation versorgten UE durch das QoS-Statusmodul;

- Abrufen von Standorten der von der Basisstation versorgten UE durch das QoS-Statusmodul von einer Standortverwaltungsfunktion, LMF;
- Bestimmen einer QoS-Region, in der sich eine Mehrzahl von UEs mit QoS-Parametern unter einer QoS-Schwelle befindet, durch das QoS-Statusmodul basierend auf dem Abruf- und dem Bestimmungsschritt;
- Anfordern einer Bereitstellung eines Relaisknotens in der QoS-Region zum Versorgen der Mehrzahl von UEs mit QoS-Parametern unter der QoS-Schwelle durch das QoS-Statusmodul.

**5.** Verfahren nach Anspruch 4, wobei der Schritt des Bestimmens der QoS-Region ein Bestimmen eines Schwerpunkts der QoS-Region umfasst, und wobei der Schritt des Anforderns ein Anfordern der Bereitstellung des Relaisknotens an dem bestimmten Schwerpunkt umfasst.

**6.** Verfahren nach einem der Ansprüche 4 bis 5, wobei der Schritt des Bestimmens der QoS-Region ein Vorhersagen zukünftiger QoS-Parameter und Standorte der von der Basisstation versorgten UE basierend auf früheren QoS-Parametern und früheren Standorten der von der Basisstation versorgten UE umfasst.

**7.** Relaisknoten zum Ermöglichen der Übergabe einer Benutzereinrichtung, UE, in einem Telekommunikationsnetzwerk von einer Basisstation an einen Relaisknoten, wobei der Relaisknoten zum Weiterleiten von Verkehr zwischen einer UE und der Basisstation ausgelegt ist, wobei der Relaisknoten umfasst:

- eine Empfangseinrichtung, die zum Empfangen einer Anforderung zur Übergabe der mit der Basisstation verbundenen UE von der Basisstation ausgelegt ist;

**dadurch gekennzeichnet, dass** der Relaisknoten ferner umfasst:

- eine Sendeeinrichtung, die zum Senden einer Dienstqualitäts-,QoS-,Abfrageanforderung zum Abfragen, ob ein QoS-Parameter der UE unter einer QoS-Schwelle liegt, an das QoS-Statusmodul ausgelegt ist;
- wobei die Empfangseinrichtung ferner zum Empfangen einer QoS-Abfragebestätigung vom QoS-Statusmodul ausgelegt ist, um dadurch zu bestätigen, dass der QoS-Parameter der UE unter der QoS-Schwelle für den Relaisknoten liegt;
- die Sendeeinrichtung ferner zum Senden einer Übergabebestätigungsnachricht basierend auf der QoS-Abfragebestätigung an die Basisstation ausgelegt ist, um dadurch die Übergabe der UE von der Basisstation an den Relaisknoten zu bestätigen.

**8.** Relaisknoten nach Anspruch 7, wobei die Empfangseinrichtung ferner zum Empfangen einer Rekonfiguration-abgeschlossen-Nachricht von der UE ausgelegt ist, um dadurch anzuzeigen, dass die UE von der Basisstation an den Relaisknoten übergeben wird, und wobei die Sendeeinrichtung zum Senden einer UE-Statusaktualisierungsnachricht an ein QoS-Statusmodul ausgelegt ist, um dadurch anzuzeigen, dass die UE mit dem Relaisknoten verbunden ist.

**9.** Dienstqualitäts-,QoS-,Statusmodul zum Weitergeben einer Benutzereinrichtung, UE, in einem Telekommunikationsnetzwerk von einer Basisstation an einen Relaisknoten, wobei der Relaisknoten zum Weiterleiten von Verkehr zwischen einer UE und der Basisstation ausgelegt ist, **dadurch gekennzeichnet, dass** das QoS-Statusmodul umfasst:

- eine Empfangseinrichtung, die zum Empfangen einer QoS-Abfrageanforderung zum Abfragen, ob ein QoS-Parameter der von der Basisstation versorgten UE unter einer QoS-Schwelle für den Relaisknoten liegt, vom Relaisknoten ausgelegt ist;
- eine Sendeeinrichtung, die zum Senden einer QoS-Abfragebestätigung an den Relaisknoten ausgelegt ist, um dadurch zu bestätigen, dass der QoS-Parameter der UE unter der QoS-Schwelle liegt, wenn bestimmt wird, dass der QoS-Parameter der UE unter der QoS-Schwelle liegt.

**10.** QoS-Statusmodul nach Anspruch 9 , wobei das QoS-Statusmodul ferner umfasst:

- eine Prozesseinrichtung, die zum Bestimmen von QoS-Parametern der von der Basisstation versorgten UE ausgelegt ist;
- eine Abrufeinrichtung, die zum Abrufen von Standorten der von der Basisstation versorgten UE von einer Standortverwaltungsfunktion, LMF, ausgelegt ist;
- eine Prozesseinrichtung, die zum Bestimmen einer QoS-Region, in der sich eine Mehrzahl von UEs mit QoS-Parametern unter einer QoS-Schwelle befindet, basierend auf dem Abruf- und dem Bestimmungsschritt ausgelegt ist;
- eine Anforderungseinrichtung, die zum Anfordern einer Bereitstellung eines Relaisknotens in der QoS-Region zum Versorgen der Mehrzahl von UEs mit QoS-Parametern unter der QoS-Schwelle ausgelegt ist.

**11.** QoS-Statusmodul nach Anspruch 10, wobei die Prozesseinrichtung ferner zum Bestimmen eines Schwerpunkts der QoS-Region ausgelegt ist, und wobei die Anforderungseinrichtung zum Anfordern der Bereitstellung des Relaisknotens an dem bestimmten Schwerpunkt ausgelegt ist.

**12.** QoS-Statusmodul nach einem der Ansprüche 10 bis 11, wobei die Prozesseinrichtung ferner zum Vorhersagen zukünftiger QoS-Parameter und Standorte der von der Basisstation versorgten UE basierend auf früheren QoS-Parametern und früheren Standorten der von der Basisstation versorgten UE ausgelegt ist.

**13.** Computerprogrammprodukt, umfassend ein computerlesbares Medium mit darauf gespeicherten Anweisungen, die bei Ausführung auf einem Relaisknoten den Relaisknoten zum Implementieren eines Verfahrens nach einem der die Ansprüche 1 bis 2 veranlassen.

**14.** Computerprogrammprodukt, umfassend ein computerlesbares Medium mit darauf gespeicherten Anweisungen, die bei Ausführung auf einem QoS-Statusmodul das QoS-Statusmodul zum Implementieren eines Verfahrens nach einem der die Ansprüche 3 bis 6 veranlassen.

**Revendications**

**1.** Procédé de transfert intercellulaire d'un équipement utilisateur, UE, dans un réseau de télécommunication depuis une station de base à un noeud de relais, le noeud de relais étant agencé pour relayer un trafic entre un UE et ladite station de base, dans lequel ledit procédé comprend les étapes suivantes :

- la réception, par ledit noeud de relais, depuis ladite station de base, d'une demande de transfert intercellulaire dudit UE connecté à ladite station de base ;

**caractérisé par** les étapes suivantes :

- la transmission, par ledit noeud de relais, d'une demande d'interrogation de QoS à un module de statut de QoS pour interroger si un paramètre de QoS dudit UE est ou non inférieur à un seuil de QoS pour ledit noeud de relais ;
- la réception, par ledit noeud de relais, depuis ledit module de statut de QoS, d'un accusé de réception d'interrogation de QoS reconnaissant de ce fait que ledit paramètre de QoS dudit UE est inférieur audit seuil de QoS pour ledit noeud de relais ;
- la transmission, par ledit noeud de relais, à ladite station de base, sur la base dudit accusé de réception d'interrogation de QoS, d'un message d'accusé de réception de transfert intercellulaire reconnaissant de ce fait le transfert intercellulaire dudit UE de ladite station de base audit noeud de relais.

**2.** Procédé selon la revendication 1, dans lequel ledit procédé comprend en outre les étapes suivantes :

- la réception, par ledit noeud de relais, depuis ledit UE, d'un message de fin de reconfiguration indiquant de ce fait que ledit UE est transféré par transfert intercellulaire de ladite station de base audit noeud de relais ;
- la transmission, par ledit noeud de relais, audit module de statut de QoS, d'un message de mise à jour de statut d'UE indiquant de ce fait que ledit UE est connecté audit noeud de relais.

**3.** Procédé de transfert intercellulaire d'un équipement utilisateur, UE, dans un réseau de télécommunication depuis une station de base à un noeud de relais, le noeud de relais étant agencé pour relayer un trafic entre un UE et ladite station de base, **caractérisé en ce que** ledit procédé comprend les étapes suivantes :

- la réception, par un module de statut de qualité de service, QoS, depuis ledit noeud de relais, d'une demande d'interrogation de QoS pour demander si un paramètre de QoS dudit UE desservi par ladite station de base est ou non inférieur à un seuil de QoS pour ledit noeud de relais ;
- la transmission, par ledit module de statut de QoS, audit noeud de relais, d'un accusé de réception d'interrogation de QoS reconnaissant de ce fait que ledit paramètre de QoS dudit UE est inférieur audit seuil de QoS s'il est déterminé que le paramètre de QoS dudit UE est inférieur audit seuil de QoS.

4. Procédé selon la revendication 3, dans lequel ledit procédé comprend en outre les étapes suivantes :

   - la détermination, par ledit module de statut de QoS, de paramètres de QoS de l'UE desservi par ladite station de base ;
   - la récupération, par ledit module de statut de QoS, depuis une fonction de gestion d'emplacement, LMF, d'emplacements dudit UE desservi par ladite station de base ;
   - la détermination, par ledit module de statut de QoS, d'une région de QoS dans laquelle il est situé une pluralité d'UE ayant des paramètres de QoS inférieurs à un seuil de QoS sur la base desdites étapes de récupération et de détermination ;
   - la demande, par ledit module de statut de QoS, d'un déploiement d'un noeud de relais dans ladite région de QoS pour desservir ladite pluralité d'UE ayant des paramètres de QoS inférieurs audit seuil de QoS.

5. Procédé selon la revendication 4, dans lequel ladite étape de la détermination de ladite région de QoS comprend la détermination d'un centroïde de ladite région de QoS, et dans lequel ladite étape de demande comprend la demande d'un déploiement dudit noeud de relais au niveau dudit centroïde déterminé.

6. Procédé selon la revendication 4 ou 5, dans lequel ladite étape de détermination de ladite région de QoS comprend la prévision de futurs paramètres de QoS et de futurs emplacements dudit UE desservi par ladite station de base sur la base de précédents paramètres de QoS et de précédents emplacements dudit UE desservi par ladite station de base.

7. Noeud de relais pour faciliter le transfert intercellulaire d'un équipement utilisateur, UE, dans un réseau de télécommunication depuis une station de base à un noeud de relais, le noeud de relais étant agencé pour relayer un trafic entre un UE et ladite station de base, dans lequel ledit noeud de relais comprend :

   - un équipement de réception agencé pour recevoir, depuis ladite station de base, une demande de transfert intercellulaire dudit UE connecté à ladite station de base ;

   **caractérisé en ce que** le noeud de relais comprend en outre :

   - un équipement de transmission pour transmettre, à un module de statut de QoS, une demande d'interrogation de qualité de service, QoS, pour interroger si un paramètre de QoS dudit UE est ou non inférieur à un seuil de QoS ;
   - ledit équipement de réception étant en outre agencé pour recevoir, depuis ledit module de statut de QoS, un accusé de réception d'interrogation de QoS reconnaissant de ce fait que ledit paramètre de QoS dudit UE est inférieur audit seuil de QoS ;
   - ledit équipement de transmission étant en outre agencé pour transmettre, à ladite station de base, sur la base dudit accusé de réception d'interrogation de QoS, un message d'accusé de réception de transfert intercellulaire reconnaissant de ce fait le transfert intercellulaire dudit UE de ladite station de base audit noeud de relais.

8. Noeud de relais selon la revendication 7, dans lequel ledit équipement de réception est en outre agencé pour recevoir, depuis ledit UE, un message de fin de reconfiguration indiquant de ce fait que ledit UE est transféré par transfert intercellulaire de ladite station de base audit noeud de relais, et dans lequel ledit équipement de transmission est agencé pour transmettre, à un module de statut de QoS, un message de mise à jour de statut d'UE indiquant de ce fait que ledit UE est connecté audit noeud de relais.

9. Module de statut de qualité de service, QoS, pour le transfert intercellulaire d'un équipement utilisateur, UE, dans un réseau de télécommunication depuis une station de base à un noeud de relais, le noeud de relais étant agencé pour relayer un trafic entre un UE et ladite station de base, **caractérisé en ce que** ledit module de statut de QoS comprend :

   - un équipement de réception agencé pour recevoir, depuis ledit noeud de relais, une demande d'interrogation de QoS pour demander si un paramètre de QoS dudit UE desservi par ladite station de base est ou non inférieur à un seuil de QoS pour ledit noeud de relais ;
   - un équipement de transmission agencé pour transmettre, audit noeud de relais, un accusé de réception d'interrogation de QoS reconnaissant de ce fait que ledit paramètre de QoS dudit UE est inférieur audit seuil de QoS s'il est déterminé que le paramètre de QoS dudit UE est inférieur audit seuil de QoS.

10. Module de statut de QoS selon la revendication 9, dans lequel ledit module de statut de QoS comprend en outre :

- un équipement de traitement agencé pour déterminer des paramètres de QoS de l'UE desservi par ladite station de base ;
- un équipement de récupération agencé pour récupérer, depuis une fonction de gestion d'emplacement, LMF, des emplacements dudit UE desservi par ladite station de base ;
- un équipement de traitement agencé pour déterminer une région de QoS dans laquelle il est situé une pluralité d'UE ayant des paramètres de QoS inférieurs à un seuil de QoS sur la base desdites étapes de récupération et de détermination ;
- un équipement de demande agencé pour demander un déploiement d'un noeud de relais dans ladite région de QoS pour desservir ladite pluralité d'UE ayant des paramètres de QoS inférieurs audit seuil de QoS.

11. Module de statut de QoS selon la revendication 10, dans lequel ledit équipement de traitement est en outre agencé pour déterminer un centroïde de ladite région de QoS, et dans lequel ledit équipement de demande est agencé pour demander un déploiement dudit noeud de relais au niveau dudit centroïde déterminé.

12. Module de statut de QoS selon la revendication 10 ou 11, dans lequel ledit équipement de traitement est en outre agencé pour prévoir de futurs paramètres de QoS et de futurs emplacements dudit UE desservi par ladite station de base sur la base de précédents paramètres de QoS et de précédents emplacements dudit UE desservi par ladite station de base.

13. Produit programme informatique comprenant un support lisible par ordinateur sur lequel sont stockées des instructions qui, lorsqu'elles sont exécutées par un noeud de relais, amènent ledit noeud de relais à mettre en œuvre un procédé selon la revendication 1 ou 2.

14. Produit programme informatique comprenant un support lisible par ordinateur sur lequel sont stockées des instructions qui, lorsqu'elles sont exécutées par un module de statut de QoS, amènent ledit module de statut de QoS à mettre en œuvre un procédé selon l'une quelconque des revendications 3 à 6.

Fig. 1

11

12

14

$A_{UE1}^{Out}$

$A_{UE1}^{In}$

×

((·|||·))

$A_{UE2}^{In}$
×

Centroid of
UE1, UE2, UE3

× $A_{UE3}^{In}$

$A_{UE3}^{Out}$

13

Fig. 2

EP 4 118 873 B1

Fig. 3

18

**31**

**32**

Start QoS Status Module

**33**
Monitor Radio and Network Performance of UEs

**34**
Request LCS from LMF

**35**
Locations and QoS of UEs

**36**
Proactive mode?

Yes

**37**
Forecast locs and QoS at $t + T$

No

**38**
Subsets of low QoS UEs with more than one member

**39**
Compute centroid and $p$ for all subsets

**40**
Regional low QoS detected? ($p^* > 1 - q$ ?)

No

Yes

Correlator

**41**
New IAB request at centroid $C^*$

Fig. 4

Fig. 5

71

72    4    5    73    74    75

| UE | gNB | IAB node | QSM | LMF | IMM |

Measurement

76

UE STATUS UPDATE    77

UE STATUS UPDATE ACK    79

78

Correlator    UE LCS REQUEST

UE LCS REPLY

80

81

New IAB Node
Decision

82

IAB NODE ACTIVATION REQUEST

84

IAB NODE ON REQUEST

83

IAB Node RRC and
Integration Setup    85

IAB NODE ON COMPLETE

IAB NODE ACTIVATION COMPLETE

86

Fig. 6

Fig. 7

5

111

112

113

114

| Receive equipment | | Transmit equipment |

CPU

M

Fig. 8

5

111                          112

113

114

Receive
equipment

Transmit
equipment

CPU

M

Fig. 9

24

131

132

133

134

Receive equipment

Transmit equipment

CPU

M

Fig. 10

**EP 4 118 873 B1**

**REFERENCES CITED IN THE DESCRIPTION**

**Patent documents cited in the description**

- WO 2013137600 A
- US 2015334614 A
- US 20130225181 A
- WO 2014127795 A
- US 20150171953 A